# EUROPEAN PATENT SPECIFICATION

(11) **EP 2 211 754 B1**
(45) Date of publication and mention of the grant of the patent: **04.12.2013**
(21) Application number: 08802650.5
(22) Date of filing: 26.09.2008
(51) Int. Cl.: A61C 8/00

(54) **DENTAL IMPLANT SYSTEM**
Dental-Implantansystem
SYSTÈME D'IMPLANT DENTAIRE

(30) Priority: 26.09.2007 EP 07018894
(43) Date of publication of application: 04.08.2010
(73) Proprietor: Straumann Holding AG, 4002 Basel (CH); Universität Bern, 3012 Bern (CH)
(72) Inventor: HOFSTETTER, Willy, CH-3312 Fraubrunnen (CH); HUNZIKER, Ernst, CH-3067 Boll (CH); DE WILD, Michael, Ch-4103 Bottmingen (CH); WIELAND, Mar, CH-4054 Basel (CH)
(74) Representative: Schaad, Balass, Menzl & Partner AG
(86) International application number: PCT/EP2008/008198
(87) International publication number: WO 2009/040124

(56) References cited:
- EP-A- 0 445 667
- DE-A1- 4 229 241
- DE-A1- 10 230 720
- US-B1- 6 627 321

## Description

The present invention relates to a dental implant system, according to claim 1, and to a process for preparing the dental implant system, according to claim 6.

Dental implant systems have been successfully used since more than thirty years. They usually comprise an anchoring part adapted for anchoring the dental implant system within the patient's jaw bone and a mounting part adapted for the attachment of a prosthesis element usually by using an intermediate so-called abutment.

For clinical success, the material of a dental implant system should apart from being biocompatible also be osteoconductive. An osteoconductive material will promote local osteogenic activity, which, in turn, will accelerate an implant's osseointegration, thereby improving its biomechanical stability within the bony skeleton.

Research of a largely empirical nature has revealed titanium and its alloys, such as TiAl₆V₄ or TiAl₆Nb₇, to be one of the most highly biocompatible and osteoconductive of the implant metals (Dearnley, P.A., Proc Inst Mech Eng [H] 1999, 213(2): pages 107-135). Titanium implants greatly facilitate bone formation and expedite osseointegration. They also elicit negligible foreign-body giant-cell reactions and only minimal adverse tissue responses, such as inflammatory reactions, impairment of local immune responses and allergic reactions (Pohler, O.E., Injury 2000, 31 Suppl 4: pages 7-13). Likewise, local tissue toxicity effects and the local precipitation or inactivation of organic molecules are virtually absent (Ferreira, M.E. et al., J Trace Elem Med Biol 2003, 17(1): pages 45-49).

Steinemann SG (1998 Titanium - the material of choice? Periodontol 2000 17:7-21) showed an increased osteoblasts count on titanium (Ti) and zirconium (Zr) compared to niobium (Nb) and tantalum (Ta). It is here concluded that only Ti and Zr have osteointegrative properties.

Osteoconductivity of a titanium implant has been turned out to be particularly efficient if the surface has a rough topography as obtained by mechanical roughening, e.g. a blasting process, etching or both. Particularly good results are obtained when mechanical roughening of the implant's surface is combined with subsequent etching of the roughened surface, as for example described in Li et al., J. Biomed. Mater. Res. 2002, 60 (2), pages 325-332.

Similarly, EP-A-0 388 576 describes the treatment of a titanium implant by a blasting process combined with subsequent etching using a reducing acid, such as HF, HCl or HCl with H₂SO₄.

This combined treatment, which yields a so-called SLA® surface ("Sandblasted with Large grit, Acid etched", Institut Straumann, Basel), i.e. a metal surface punctuated with 1- to 3-µm-diameter pits, improves the osteoconductivity of the implant and its ultimate osseointegration. Moreover, metal implants subjected to a surface-roughening treatment appear to be less liable to contamination than smooth-textured implants.

Endeavours to further improve the osteoconductivity of dental implant systems are unflagging. The motivating force behind these efforts lies in the great need to speed a patient's recovery, with a view to reducing not only the period of convalescence but also the financial burden on social and health-care systems.

Other relevant prior arts are disclosed in US6627321 and EP0445667.

The object of the present invention is to provide a dental implant system having an improved osteoconductivity compared to the currently known dental implant systems.

This object is achieved by the dental implant system defined in claim 1. Preferred embodiments are defined in the dependent claims.

The dental implant system of the present invention comprises - apart from a non-endosseous mounting part - an anchoring part which in use is at least partially embedded within the bone. The invention encompasses both one-part and two-part dental implant systems.

The appropriate shapes and dimensions of the anchoring part as well as of the mounting part are well known to the skilled person. The portion of the anchoring part's surface which is determined to be in contact with the bone after implantation is called "bone contacting surface".

The dental implant system of the present invention is characterized in that the bone contacting surface is at least partially made of a metal selected from the group of niobium, tantalum and a niobium-tantalum alloy.

It has surprisingly been found that the bone contacting surface being made of any of these metals enhances its osteoconductivity, thereby promoting bone formation and osseointegration.

In the presence of air, a protective oxide layer is spontaneously formed on these metals. They are, thus, also highly biocompatible and inert.

The bone contacting surface can either be entirely or partially made of the metal selected from the group of niobium, tantalum and a niobium-tantalum alloy. In the latter case, preferably at least 80 % of the surface area of the bone contacting surface is made of this metal.

According to the present invention, the metal selected from the group of niobium, tantalum and a niobium-tantalum alloy is coated on a basic implant body. The basic implant body can be partially or entirely coated. In general, the coating has a minimal thickness of 5 nm in order to get a completely closed covering layer. Principally, thicknesses of 100 µm (=100'000 nm) can be created.

The basic implant body is made of titanium, zirconium, a titanium or zirconium alloy and/or a ceramic material. As the mechanical properties are governed by the basic implant body, the preferred mechanical properties of the metal of the basic implant body are thus maintained. The term "ceramic material" as used herein encompasses any type of ceramic such as ceramics based on zirconia, alumina, silica or mixtures thereof, optionally comprising further constituents. Preferably, the ceramic material is zirconia, more preferably yttria-stabilized zirconia due to its high fracture toughness and bending strength.

It is further preferred that at least the bone contacting surface has a rough surface topography.

To this end, at least the part of the surface of the basic implant body on which the bone contacting surface is to be formed is roughened by a mechanical roughening technique, etching or both, followed by coating the treated surface with the metal selected from the group of niobium, tantalum and a niobium-tantalum alloy.

According to a preferred embodiment, the roughening of the basic implant body is carried out according to the process described for example in EP-A-0 388 576 leading to an SLA® surface topography.

In particular, the dental implant system is prepared by a process comprising the subsequent steps of
a) providing a basic implant body made of titanium and/or a titanium alloy,
b) roughening at least a part of the surface of the basic implant body mechanically and/or by using plasma technology,
c) etching the roughened surface with an acid and
d) coating the roughened and etched surface with the metal selected from the group of niobium, tantalum and a niobium-tantalum alloy.

By this process, dental implant systems comprising a bone contacting surface having a metal surface according to the present invention and having at the same time an SLA® surface topography can be obtained.

Preferably, the roughening of step b) is carried out by shot-blasting and/or sand-blasting. The etching of step c) is preferably carried out by an inorganic acid or a blend of inorganic acids. More preferably, the inorganic acid(s) is/are selected from the group consisting of hydrofluoric acid, hydrochloric acid, sulphuric acid or mixtures thereof.

By analogy with the above, the basic implant body can also be made of a ceramic material, in particular of zirconia. If the basic implant body is made of zirconia, a preferred surface topography can be obtained by the process described in European patent applications No. 07 007 949 and 07 007 950 before coating the roughened and etched surface with the metal selected from the group of niobium, tantalum and a niobium-tantalum alloy. The disclosure of European patent applications No. 07 007 949 and 07 007 950 is incorporated herein by reference.

The metal coated on the basic implant body has a thickness in the range of 5 nm to 100 nm, more preferred about 20 nm to about 30 nm. This thickness is orders of magnitudes lower than the topography features of known osteoconductive surfaces. Consequently, a coating of this thickness does not interfere with the osteoconductive SLA® surface topography. Thus, the improved osteoconductivity obtained by the metal surface according to the present invention is combined with the high osteoconductivity of the well established SLA® surface topography.

Due to this combination, a bone contacting surface having an osteoconductivity superior to the one of the corresponding SLA® titanium surface is obtained.

Preferably, the basic implant body is coated with the metal of the present invention by a chemical or physical vapour deposition process.

Physical vapour deposition (PVD) has the advantage that it is more flexible. In principle, both PVD by sputtering and by evaporation is thinkable. However, sputtering is preferred as it gives better step coverage compared to evaporation and also covers undercuts.

The present invention is further illustrated by the following examples. In these examples, the influence of different well-defined metal-surface chemistries on osteogenesis in vitro was investigated using cultures of primary human osteoblasts. Metal-surface chemistry was the only variable investigated. Changes in this parameter were effected without modifying the complex topography of the implant surface.

Specifically, the effects of a number of inert and biocompatible metals (zirconium, niobium, tantalum) and chromium and gold (both known not to be osseointegrative) were compared to those elicited by titanium (positive control).

The data thereby obtained substantiate the surprising finding that a bone contacting surface made of a metal selected from the group of niobium, tantalum and a niobium-tantalum alloy has a beneficial effect with regard to osteoconductivity.

### Examples

### Disk Fabrication

Titanium (Ti) disks were prepared from 1 mm thick sheets of grade 2 unalloyed Ti (ASTM F67 "Unalloyed titanium for surgical implant applications") and supplied by Institut Straumann AG (Basel, Switzerland). The disks were punched to be 5 mm in diameter so as to fit into the well of a 96-well tissue culture plate. The disks were first degreased by washing in acetone, processing through 2% ammonium fluoride / 2% hydrofluoric acid / 10% nitric acid solution at 55°C for 30 seconds.

To produce SLA surfaces, the disks were further coarse grit-blasted with 0.25 mm to 0.50 mm corundum grit at 5 bar until the surface became a uniform gray, followed by acid etching at elevated temperatures. After preparation, SLA disks were rinsed in deionized water and dried under nitrogen.

### Metal Coating

For the *in vitro* tests, it is important that the metal coating on the disk covers the titanium surface uniformly without voids to ensure that the cell cultures only see the modified surface. Hence a conformal coating technique is required.

For the present example, physical vapour deposition (PVD) has been used.

In a vacuum chamber, a highly pure target made of the material to be deposited is bombarded with positive argon ions created in a plasma discharge. The ion bombardment ejects atoms from the target material, which condense on the substrate surface placed opposite the target causing a conformal film deposition.

For coating of the titanium disks, a Nordiko Sputtering system has been used. A sample holder has been designed and fabricated that can hold up to 200 disks in each process run. The disks are first cleaned in an argon RF (radio frequency) plasma at 500 W for 5 minutes. The sputter deposition itself is done with a DC (direct current) plasma (200 to 600 W, 3 to 5 minutes). The film thickness is measured on a glass wafer, which is sputtered simultaneously with the titanium disks but allows stylus profiler measurements because of its smooth surface. The deposition time and power have been controlled to obtain film thicknesses of 40 nm ± 10 nm.

### Characterization

Surface topography was qualitatively examined using scanning electron microscopy (SEM) and quantitatively measured by confocal 3D white light microscopy (µSurf, NanoFocus AG, Oberhausen, Germany) to calculate three-dimensional roughness parameters (Sₐ, S_{q}, Sₜ and Sₖ). Water contact angles of each surface type were determined (Tensiometer Sigma 70, KSV Instruments Ltd., Helsinki, Finland). The chemical composition of the surfaces was examined by X-ray photoelectron spectroscopy (XPS, VG/SSI 2803 S-Probe, Kratos Analytical Ltd., Hofheim, Germany). REM/EDX and XPS measurements prove the closed deposition layer.

The complex microstructure of the SLA surface results from the large grit sandblasting process, which produces cavities with an average diameter of 20 to 40 µm, and the acid etch, which produces micropits approximately 0.5 to 3 µm in diameter.

### In Vitro Tests

To assess osteoblast behaviour on metal surfaces, primary human osteoblasts were cultured on the metal disks and the cell number (cell proliferation, XTT) as well as the expression of alkaline phosphatase (as a marker for differentiation of the cells) were determined. Osteoblasts were grown from bone chips (surgical waste from total hip arthroplasties, obtained from the Clinics for Orthopaedic Surgery) according to standard methods known to the skilled person.

The cells were cultured for three and six days on disks with SLA surfaces coated with tantalum (Ta), chromium (Cr), gold (Au), zirconium (Zr), niobium (Nb) and titanium (Ti), either with or without 1,25(OH)₂D₃ (10⁻⁸M) and dexamethasone (Dex, 10⁻⁸M) which enhances alkaline phosphatase activity. For control measurements, the cells were grown on machined titanium disks (PT).

The measured alkaline phosphatase activity and cell number are given in the following Figures, of which
Fig. 1 is a graphic representation of alkaline phosphatase activity for each sample after three days of culturing;
Fig. 2 is a graphic representation of alkaline phosphatase activity for each sample after six days of culturing;
Fig. 3 is a graphic representation of the cell number for each sample after three days of culturing;
Fig. 4 is a graphic representation of the cell number for each sample after six days of culturing.

Comparison of machined titanium and SLA surfaces revealed an increase in the cell number and the alkaline phosphatase activity on SLA surfaces. The cell number decreased and the alkaline phosphatase activity increased when the cells were grown with 1,25(OH)₂D₃/Dex.

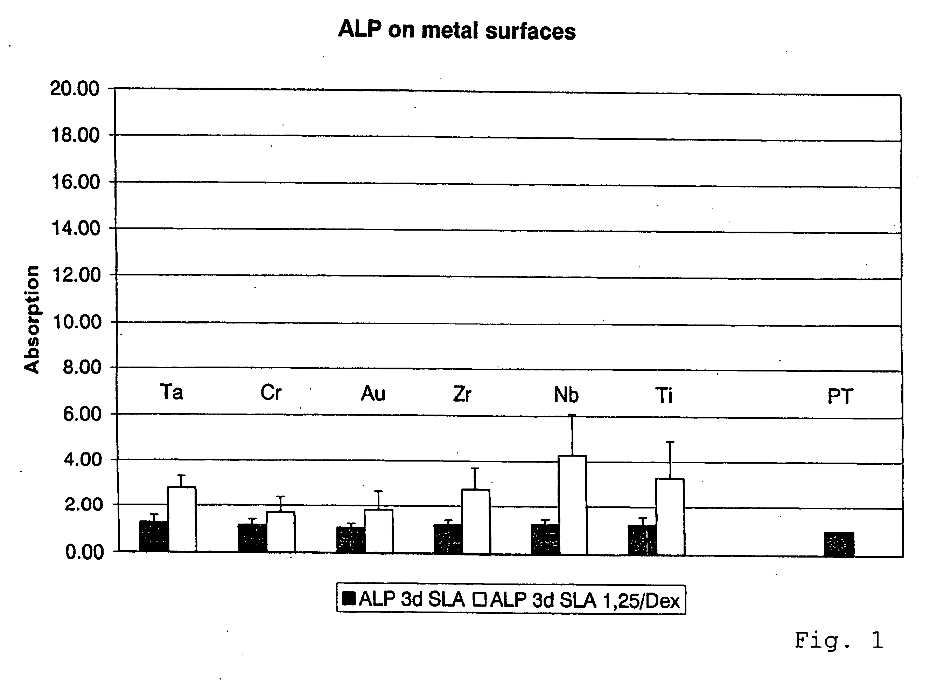

As given in Fig. 1, the alkaline phosphatase activity of the primary human osteoblasts which were cultured on the niobium (Nb) coated sample is after three days of culturing superior to all other samples. For the tantalum coated sample, the alkaline phosphatase activity is after this period in the range of the respective zirconium coated sample.

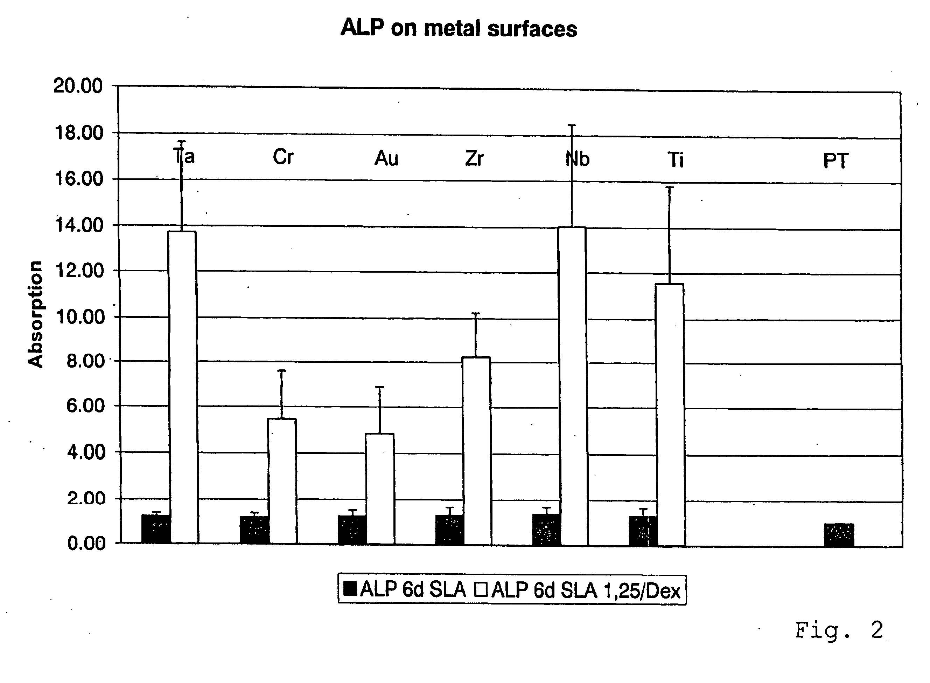

According to Fig. 2, the alkaline phosphatase activity for both the tantalum and the niobium coated sample is superior to all other samples including the titanium sample. Thus, differentiation of the cells cultured on the samples according to the present invention is after six days of culturing considerably higher than the one of the cells cultured on the sample having a standard titanium surface.

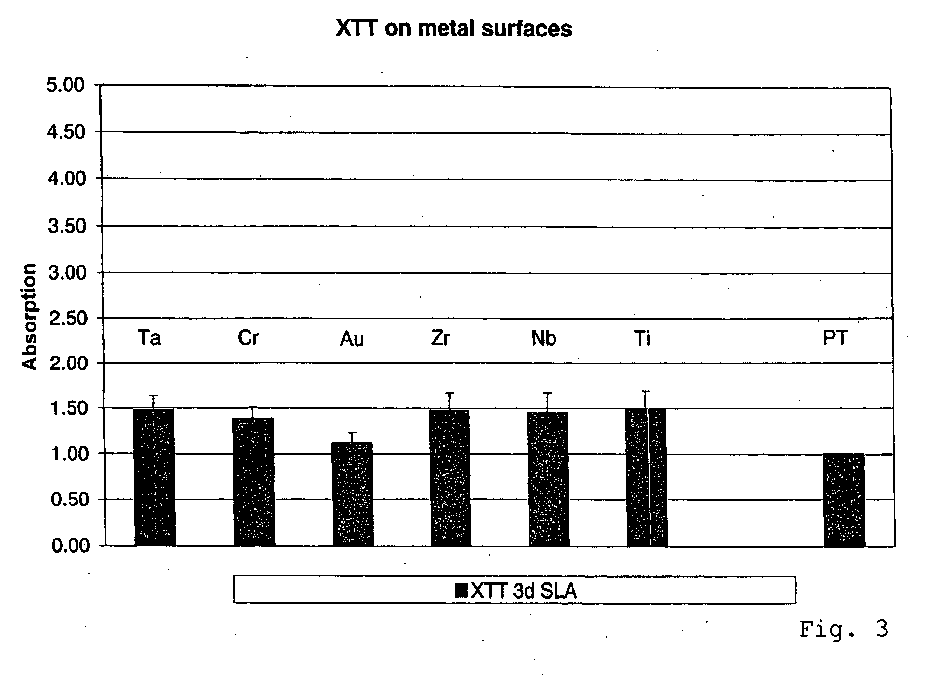

As shown in Fig. 3, the cell number relating to the samples of the present invention, i.e. being coated by tantalum and niobium, respectively, is after three days of culturing comparable to the sample having a standard titanium surface.

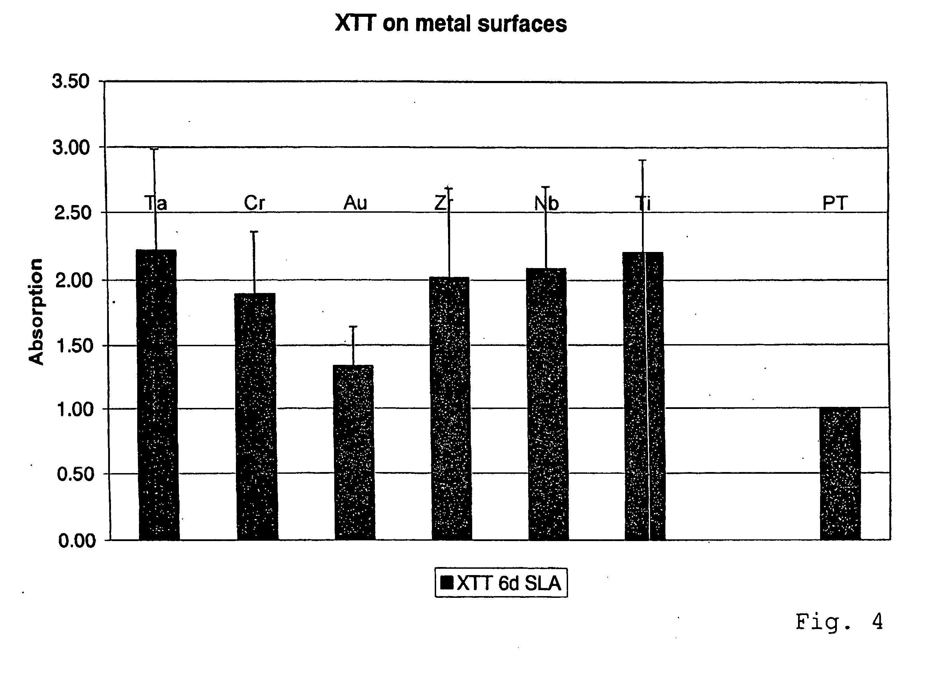

According to Fig. 4, the cell number for the tantalum coated sample and the niobium coated sample is after six days of culturing still in the same range as for the standard titanium sample, the tantalum coated sample showing the highest cell number.

Thus, the disks which have a metal surface according to the present invention show after six days of culturing an improved differentiation and a comparable proliferation compared to the samples having a titanium surface, which substantiates the finding that the dental implant systems according to the present invention have an improved osteoconductivity compared to the standard titanium implants.

Throughout the examples, the cell number and the alkaline phosphatase activity are lowest on surfaces made of gold (Au) or chromium (Cr).

The above findings were confirmed by RT-PCR measurements for the expression of collagen I and osteocalcin (BGP).

## Claims

1. Dental implant system comprising an anchoring part adapted for anchoring the dental implant system within bone, said anchoring part having a bone contacting surface, which is at least partially made of a metal selected from the group of niobium, tantalum and a niobium-tantalum alloy, said metal being coated on a basic implant body made of a metal selected from the group of titanium, zirconium and a titanium or zirconium alloy, or of a ceramic material, wherein the metal coated on the basic implant body has a thickness of 5 nm to 100 nm.

2. Dental implant system according to claim 1, wherein at least the bone contacting surface has a rough surface topography.

3. Dental implant system according to claim 1 or 2, wherein the ceramic material of the basic implant body is zirconia.

4. Dental implant according to claim 2 obtainable by the subsequent steps of
a) providing a basic implant body made of titanium and/or a titanium alloy,
b) roughening at least a part of the surface of the basic implant body mechanically and/or by using plasma technology,
c) etching the roughened surface with an acid and
d) coating the roughened and etched surface with the metal selected from the group of niobium, tantalum and a niobium-tantalum alloy.

5. Dental implant system according to any of the preceding claims wherein the metal coated on the basic implant body has a thickness of 20 nm to 30 nm.

6. Process for preparing a dental implant system according to any of the preceding claims wherein the metal coated an the basic implant body has a thickness of 5 nm to 100 nm comprising the subsequent steps of
a) providing a basic implant body made of titanium and/or a titanium alloy,
b) roughening at least a part of the surface of the basic implant body mechanically and/or by using plasma technology,
c) etching the roughened surface with an acid and
d) coating the roughened and etched surface with the metal selected from the group of niobium, tantalum and a niobium-tantalum alloy.

7. The process according to claim 6 wherein mechanical roughening of step b) is carried out by shot-blasting and/or sand-blasting.

8. The process according to claim 6 or 7 wherein the etching of step c) is carried out by an inorganic acid or a blend of inorganic acids.

9. The process according to claim 8 wherein the inorganic acid(s) is/are selected from the group of hydrofluoric acid, hydrochloric acid, sulphuric acid and mixtures thereof.

## Patentansprüche

1. Dentalimplantatsystem umfassend einen Verankerungsteil zur Verankerung des Dentalimplantatsystems im Knochen, wobei der Verankerungsteil eine Knochenkontaktfläche aufweist, die zumindest teilweise aus einem Metall aus der Gruppe bestehend aus Niob, Tantal und einer Niob-Tantal-Legierung hergestellt ist, wobei besagtes Metall als Beschichtung auf einen aus einem Metall aus der Gruppe bestehend aus Titan, Zirkon und einer Titan- oder Zirkon-Legierung oder einem keramischen Material hergestellten Grundkörper aufgebracht ist, **dadurch gekennzeichnet, dass** die Metallbeschichtung auf dem Grundkörper eine Dicke von 5 nm bis 100 nm aufweist.

2. Dentalimplantatsystem gemäss Anspruch 1, **dadurch gekennzeichnet, dass** zumindest die Knochenkontaktfläche eine raue Oberflächentopographie aufweist.

3. Dentalimplantatsystem gemäss Anspruch 1 oder 2, **dadurch gekennzeichnet, dass** das keramische Material des Grundkörpers Zirkonoxid ist.

4. Dentalimplantatsystem gemäss Anspruch 2, erhältlich durch die nachfolgenden Schritte umfassend
a) Bereitstellen eines Implantatgrundkörpers aus Titan und/oder einer Titanlegierung,
b) mechanische Aufrauung und/oder Aufrauung mittels Plasmatechnologie zumindest eines Teils der Oberfläche des Implantatgrundkörpers,
c) Ätzung der aufgerauten Oberfläche mit einer Säure, und
d) Beschichten der aufgerauten und geätzten Oberfläche mit dem Metall, das aus der Gruppe von Niob, Tantal und einer Niob-Tantal-Legierung ausgewählt ist.

5. Dentalimplantatsystem gemäss einem der vorangehenden Ansprüche, **dadurch gekennzeichnet, dass** die Metallbeschichtung auf dem Grundkörper eine Dicke von 20 nm bis 30 nm aufweist.

6. Verfahren zur Herstellung eines Dentalimplantatsystems gemäss einem der vorangehenden Ansprüche, **dadurch gekennzeichnet, dass** die Metallbeschichtung auf dem Implantatgrundkörper eine Dicke von 5 nm bis 100 nm aufweist, wobei das Verfahren die nachfolgenden Schritte umfasst :
a) Bereitstellen eines Implantatgrundkörpers aus Titan und/oder einer Titanlegierung,
b) mechanische Aufrauung und/oder Aufrauung mittels Plasmatechnologie zumindest eines Teils der Oberfläche des Implantatgrundkörpers,
c) Ätzung der aufgerauten Oberfläche mit einer Säure, und
d) Beschichten der aufgerauten und geätzten Oberfläche mit dem Metall, das aus der Gruppe von Niob, Tantal und einer Niob-Tantal-Legierung ausgewählt ist.

7. Verfahren gemäss Anspruch 6, **dadurch gekennzeichnet, dass** die mechanische Aufrauung in Schritt b) durch Schrotstrahlen und/oder Sandstrahlen erfolgt.

8. Verfahren gemäss Anspruch 6 oder 7, **dadurch gekennzeichnet, dass** die Ätzung in Schritt c) mit einer anorganischen Säure oder einer Mischung von anorganischen Säuren durchgeführt wird.

9. Verfahren gemäss Anspruch 8, **dadurch gekennzeichnet, dass** die anorganische Säure(n) aus der Gruppe bestehend aus Flusssäure, Salzsäure, Schwefelsäure und Mischungen davon ausgewählt ist/sind.

## Revendications

1. Système d'implant dentaire comprenant une partie d'ancrage adaptée pour ancrer le système d'implant dentaire à l'intérieur d'un os, ladite partie d'ancrage ayant une surface de contact avec l'os qui est au moins partiellement constituée d'un métal choisi parmi le niobium, le tantale et un alliage niobium-tantale, ledit métal étant déposé sur un corps d'implant de base constitué d'un métal choisi parmi le titane, le zirconium et un alliage de titane ou de zirconium, ou d'un matériau céramique, le métal déposé sur le corps d'implant de base ayant une épaisseur de 5 nm à 100 nm.

2. Système d'implant dentaire selon la revendication 1 dans lequel au moins la surface de contact avec l'os a une topographie de surface rugueuse.

3. Système d'implant dentaire selon la revendication 1 ou 2 dans lequel le matériau céramique du corps d'implant de base est une zircone.

4. Implant dentaire selon la revendication 2 pouvant être obtenu par les étapes successives consistant à
a) se procurer un corps d'implant de base constitué de titane et/ou d'un alliage de titane,
b) rugosifier au moins une partie de la surface du corps d'implant de base mécaniquement et/ou en utilisant une technologie de plasma,
c) décaper la surface rugosifiée avec un acide, et
d) recouvrir la surface rugosifiée et décapée avec le métal choisi parmi le niobium, le tantale et un alliage niobium-tantale.

5. Système d'implant dentaire selon l'une quelconque des revendications précédentes dans lequel le métal déposé sur le corps d'implant de base a une épaisseur de 20 nm à 30 nm.

6. Procédé de préparation d'un système d'implant dentaire selon l'une quelconque des revendications précédentes dans lequel le métal déposé sur le corps d'implant de base a une épaisseur de 5 nm à 100 nm, comprenant les étapes successives consistant à
a) se procurer un corps d'implant de base constitué de titane et/ou d'un alliage de titane,
b) rugosifier au moins une partie de la surface du corps d'implant de base mécaniquement et/ou en utilisant une technologie de plasma,
c) décaper la surface rugosifiée avec un acide, et
d) recouvrir la surface rugosifiée et décapée avec le métal choisi parmi le niobium, le tantale et un alliage niobium-tantale.

7. Procédé selon la revendication 6 dans lequel la rugosification mécanique de l'étape b) est réalisée par grenaillage et/ou sablage.

8. Procédé selon la revendication 6 ou 7 dans lequel le décapage de l'étape c) est réalisé avec un acide inorganique ou un mélange d'acides inorganiques.

9. Procédé selon la revendication 8 dans lequel le ou les acides inorganiques sont choisis parmi l'acide fluorhydrique, l'acide chlorhydrique, l'acide sulfurique et les mélanges de ceux-ci.
